(19) Europäisches Patentamt
European Patent Office
Office européen des brevets

(11) **EP 2 725 644 B1**

(12) **EUROPEAN PATENT SPECIFICATION**

(45) Date of publication and mention of the grant of the patent:
**19.09.2018 Bulletin 2018/38**

(51) Int Cl.:
*H01M 4/62* *(2006.01)*  *H01G 11/38* *(2013.01)*
*H01G 11/30* *(2013.01)*  *H01G 11/28* *(2013.01)*
*H01M 10/052* *(2010.01)*

(21) Application number: **12802582.2**

(22) Date of filing: **22.06.2012**

(86) International application number:
**PCT/JP2012/066048**

(87) International publication number:
**WO 2012/176895 (27.12.2012 Gazette 2012/52)**

(54) **BINDER FOR ELECTRODE OF ELECTROCHEMICAL ELEMENT, COMPOSITION FOR ELECTRODE OF ELECTROCHEMICAL ELEMENT, ELECTRODE OF ELECTROCHEMICAL ELEMENT, AND ELECTROCHEMICAL ELEMENT**

BINDEMITTEL FÜR ELEKTRODEN EINES ELEKTROCHEMISCHEN ELEMENTS, ZUSAMMENSETZUNG FÜR ELEKTRODEN EINES ELEKTROCHEMISCHEN ELEMENTS, ELEKTRODE FÜR DAS ELEKTROCHEMISCHE ELEMENT UND ELEKTROCHEMISCHES ELEMENT

LIANT POUR ÉLECTRODE D'ÉLÉMENT ÉLECTROCHIMIQUE, COMPOSITION POUR ÉLECTRODE D'ÉLÉMENT ÉLECTROCHIMIQUE, ÉLECTRODE D'ÉLÉMENT ÉLECTROCHIMIQUE ET ÉLÉMENT ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 JP 2011140358**

(43) Date of publication of application:
**30.04.2014 Bulletin 2014/18**

(73) Proprietor: **Mitsubishi Chemical Corporation Tokyo 100-8251 (JP)**

(72) Inventors:
• **OKADA, Haruki**
  **Hiroshima 739-0693 (JP)**
• **FUJIKAWA, Daisuke**
  **Hiroshima 739-0693 (JP)**
• **NODONO, Mitsufumi**
  **Hiroshima 739-0693 (JP)**

• **MOMOSE, Fumino**
  **Hiroshima 739-0693 (JP)**
• **SHIMONAKA, Ayako**
  **Hiroshima 739-0693 (JP)**
• **ITOU, Masakazu**
  **Hiroshima 739-0693 (JP)**
• **ISHII, Akihiro**
  **Kanagawa 230-0053 (JP)**
• **MOMOSE, Hikaru**
  **Hiroshima 739-0693 (JP)**

(74) Representative: **Ter Meer Steinmeister & Partner Patentanwälte mbB**
**Nymphenburger Straße 4**
**80335 München (DE)**

(56) References cited:
**WO-A1-2010/056934     WO-A1-2010/114119**
**WO-A2-2010/021557     JP-A- 2007 109 628**
**JP-A- 2009 277 660     JP-A- 2010 177 061**

**Description**

BACKGROUND OF THE INVENTION

Field of the Invention

The invention relates to a binder for an electrode of an electrochemical element, a composition for an electrode of an electrochemical element, an electrode of an electrochemical element, and an electrochemical element.

Description of Related Art

A secondary battery is used as an electrochemical element in weak current commercial devices such as notebook computers and mobile phones, and used as a storage batteries for hybrid electric vehicles and electric vehicles. As the secondary battery, the lithium ion secondary battery (hereinafter may be referred as a battery) is often used. In general, an electrode of the battery has a current collector and a mixture layer. The mixture layer is disposed on the current collector and holds an electrode active material and a conductive auxiliary agent through a binder.
The binder for a battery electrode, such as the anode, is generally made of a fluorine-based resin such as polyvinylidene fluoride (PVDF). When fabricating the electrode, as the binder such as PVDF is dissolved in an organic solvent such as N-methyl-2-pyrrolidone (NMP), issues such as high solvent recovery costs for drying and heavy environmental burden become significant.
In recent years, attempts have been made to replace the organic solvent with water as the binder of the cathode, and the aqueous dispersion adhesive such as styrene-butadiene rubber (SBR) latex or carboxymethyl cellulose (CMC) as a thickening agent has generally been used.
However, the aqueous dispersion adhesive circulates in an aqueous state, and therefore has the issue of increased transportation costs. Moreover, a fungicide is added in the aqueous dispersion adhesive, and therefore a battery using the aqueous dispersion adhesive is faced with issues of reduced battery performances such as incapability of maintaining the long-term high discharge capacity (cycle characteristics) or lowered rate characteristics.
Since latex is generally a composition having a low glass transition temperature, latex has the following issues: when powdered, the polymer chains become entangled and thus difficult to be dispersed in water.
Therefore, if PVDF powder is dissolved in NMP for application, it is preferable to provide the binder in the powdered form, and the powdered binder is dissolved or dispersed in water for application during the fabrication of the electrode.
Moreover, CMC is dissolved in water for application during the fabrication of the electrode. However, since the source of CMC is a natural substance, the quality is inconsistent for each of the batches supplied. Therefore, a binder that is able to be supplied with the consistent quality is preferred.
Moreover, the binder is required to procure a high battery performance.
Regarding the issues, it is disclosed that poly-N-vinyl acetamide is used as a binder (such as patent literature 1). Moreover, it is disclosed that an electrode containing poly-N-vinyl acetamide and a copolymer of ethylene oxide (EO) and propylene oxide (PO) (such as patent literature 2).

[Prior technical literatures]

[Patent literatures]

[Patent literature 1] Japanese Patent Laid-Open Publication No. 2002-251999
[Patent literature 2] Japanese Patent Laid-Open Publication No. 2002-117860 JP 2010 177061 A and WO 2010/056934 also disclose polymers applied as adhesive material, e.g. a binder, suitable for electrochemical elements containing N-vinyl formamide unit.

However, for the techniques of patent literature 1 and patent literature 2, the battery performances, in particularly the rate characteristics, are insufficient.

SUMMARY OF THE INVENTION

The object of the invention is to provide a binder for an electrode of an electrochemical element capable of improving battery performance. Moreover, the object of the invention is to provide binder for an electrode of an electrochemical element capable of being circulated in powder form.

The inventors have conducted extensive studies on the cause of the decrease in battery performance related to the binder for an electrode of an electrochemical element, and obtained the following insights.

A compound having 2 or more carbons bonded to N atoms such as N-vinyl acetamide shows a tendency of affinity toward an electrolyte solution and to swell.

Moreover, since the molecular structure of N-vinyl acetamide is rigid, when winding the electrodes or during the cutting process, the issue of the mixture layer falling off from the current collector in powder form is present.

The inventors discovered that, a polymer having an N-vinyl formamide unit as a structural unit according to independent claim 1 and appended claims can suppress a reduction of battery performance due to deterioration of binding property and increase of internal resistance of the battery, and that the polymer readily dissolves or disperses in water. The invention is thus achieved.

The invention has the aspects of the following [1] to [12].

[1] A binder for an electrode of an electrochemical element, wherein the binder is a polymer having an N-vinyl formamide unit according to independent claim 1.

[2] The binder for an electrode of an electrochemical element of [1], wherein the binder is water-soluble.

[3] The binder for an electrode of an electrochemical element of [1] or [2], wherein the content of the N-vinyl formamide unit in the polymer is 10 mol% to 100 mol%.

[4] The binder for an electrode of an electrochemical element of [1] or [2], wherein the content of the N-vinyl formamide unit in the polymer is 50 mol% to 100 mol%.

[5] The binder for an electrode of an electrochemical element of any one of [1] to [4], wherein the viscosity average molecular weight of the polymer is 10,000 to 10 million.

[6] The binder for an electrode of an electrochemical element of any one of [1] to [4], wherein the viscosity average molecular weight of the polymer is 10,000 to 8 million.

[7] The binder for an electrode of an electrochemical element of any one of [1] to [4], wherein the viscosity average molecular weight of the polymer is 50,000 to 5 million.

[8] The binder for an electrode of an electrochemical element of any one of [1] to [7], wherein the oxidation current value obtained with the cyclic voltammetry of Condition I below is 2 mA/g or less;

<Condition I>

using a three-electrode electrolytic cell of the following specification, the current value of the first cycle is determined with a scan speed of 1 mV/s and a scan range of 3.5 V to 5 V; the oxidation current value is obtained by dividing the current value at a voltage value of 4.8 V by the mass of a working electrode;

{Specification of three-electrode electrolytic cell}

working electrode: an electrode of a mixture layer containing 1 part by mass of a binder for an electrode and 1 part by mass of acetylene black is disposed between an aluminum foil and an aluminum mesh;

reference electrode: a lithium foil;

counter electrode: a lithium foil;

electrolyte solution: 1 mol/L of a hexafluorophosphate lithium solution (solvent: ethylene carbonate/diethyl carbonate=1/2 (volume ratio)).

[9] The binder for an electrode of an electrochemical element of any one of [1] to [8], wherein the reduction current value obtained with the cyclic voltammetry of Condition II below is 5 mA/g or less;

<Condition II>

using a three-electrode electrolytic cell of the following specification, the current value of the first cycle is determined with a scan speed of 1 mV/s and a scan range of 3 V to 0 V; the reduction current value is obtained by dividing a current value at a voltage value of 0.5 V by the mass of a working electrode;

{Specification of three-electrode electrolytic cell}

working electrode: an electrode of a mixture layer containing 1 part by mass of a binder for an electrode and 1 part by mass of acetylene black is disposed between an aluminum foil and an aluminum mesh;

reference electrode: a lithium foil;

counter electrode: a lithium foil;

electrolyte solution: 1 mol/L of a hexafluorophosphate lithium solution (solvent: ethylene carbonate/diethyl carbonate=1/2 (volume ratio)).

[10] A composition for an electrode of an electrochemical element, wherein the composition contains the binder for an electrode of an electrochemical element of any one of [1] to [9].

[11] An electrode for an electrochemical element, including a current collector and a mixture layer disposed on the current collector, wherein the mixture layer contains the composition for an electrode of an electrochemical element of [10] and an electrode active material.

[12] An electrochemical element, including the electrode for an electrochemical element of [11].

[Effects of the invention]

The binder for an electrode of an electrochemical element of the invention can suppress a reduction of battery performance due to deterioration of binding property and increase of internal resistance of the battery, thereby improving the battery performance. The binder for an electrode of an electrochemical element of an embodiment configuration of the invention can be circulated in powder form.

DESCRIPTION OF THE EMBODIMENTS

In the present application, an electrochemical element includes, for instance, a battery having a non-aqueous electrolyte, a capacitor, and a condenser. In the following, the electrochemical element is exemplified as a secondary battery, and more particularly a lithium ion secondary battery, to describe the invention.

(Binder for electrode of electrochemical element)

The binder for an electrode of an electrochemical element (hereinafter may be referred as a binder) is a polymer having an N-vinyl formamide unit according to independent claim 1 and appended claims.

The binder is preferably water-soluble. In the present application, the concept of "water-soluble" not only implies that the binder is completely dissolved in water, but can also imply that a portion of the binder is dissolved in water. For instance, when the binder contains water-compatible components and water-insoluble components and phase separation is confirmed in the water, the concept of "water-soluble" applies as long as a portion is dissolved in the water. In the present application, the concept of "water-soluble" applies to the situation in which 0.1 parts by mass or more is dissolved in 100 parts by mass of water.

The N-vinyl formamide unit refers to a structural unit in a polymer of N-vinyl formamide sourced from N-vinyl formamide.

Based on a total amount of 100 mol% of all the structural units constituting the polymer, the content of the N-vinyl formamide unit in the polymer is preferably 10 mol% to 100 mol%, more preferably 50 mol% to 100 mol%, and even more preferably 80 mol% to 100 mol%. The higher the content of the N-vinyl formamide unit, the less likely the N-vinyl formamide unit is to swell in the electrolyte solution and the more readily a network of a conductive auxiliary agent can form, thereby increasing the rate characteristics. Moreover, the mixture layer does not readily peel off from the current collector. That is, the higher the content of the N-vinyl formamide unit, the higher the binding property of the binder.

The molecular weight of the binder is not particularly limited, and based on the viscosity average molecular weight, is preferably 10,000 to 10 million, more preferably 100,000 to 8 million, and even more preferably 500,000 to 5 million. If the value is equal to or greater than the lower limit above, then the binding property is further improved; and if the value is equal to or less than the upper limit above, then the water solubility is further improved.

The viscosity average molecular weight is calculated by converting viscosity into molecular weight according to the viscosity of the aqueous solution of the binder or the viscosity of the organic solvent of the binder. An example of the calculation of viscosity average molecular weight is as follows.

<Calculation of viscosity average molecular weight>

The intrinsic viscosity $[\eta]$ is calculated according to the reduced viscosity ($\eta sp/C$) of the aqueous solution of the binder and the Huggins formula ($\eta sp/C=[\eta]+K'[\eta]^2 C$). Moreover, C in the above formula is the concentration (g/dL) of the binder in the aqueous solution of the binder. The determination of the reduced viscosity of the aqueous solution of the binder is described later.

The viscosity average molecular weight (M) is calculated with the Mark-Houwink formula ($[\eta]=KM^a$) according to the obtained intrinsic viscosity $[\eta]$.

Moreover, in 1 N of saline solution, the parameters of poly N-vinyl formamide are $K=8.31\times10^{-5}$, $a=0.76$, and $K'=0.31$.

{Determination of reduced viscosity}

The binder is dissolved in 1 N of saline solution with a binder concentration of 0.1 mass% to obtain an aqueous solution of the binder. The flow time (t1) at 25°C of the obtained aqueous solution of the binder is determined with an Ostwald viscometer.

In comparison, the flow time (t0) at 25°C of the 1 N saline solution without a binder is determined with an Ostwald viscometer.

The reduced viscosity ($\eta sp/C$) is calculated with the following formula (i) according to the obtained flow time.

$$\eta sp/C = \{(t/t0) - 1\}/C \cdots (i)$$

In formula (i), C is the concentration (g/dL) of the binder in the aqueous solution of the binder.

The binder can also contain a structural unit (any structural unit) other than the N-vinyl formamide unit as needed. By containing the any structural unit, mechanical properties such as rigidity or bending strength of the mixture layer are improved.

Examples of the monomer (any monomer) as the source of the any structural unit can include, for instance: a monomer having a vinyl group capable of being polymerized with N-vinyl formamide.

Examples of the any monomer can include, for instance: a vinyl cyanide monomer such as acrylonitrile, meth-acrylonitrile, $\alpha$-cyanoacrylate, dicyanovinylidene, and fumaronitrile ethyl; a vinyl halide monomer such as vinyl chloride, vinyl bromide, and vinylidene chloride; a carboxyl group-containing monomer and a salt thereof such as crotonic acid; an aromatic vinyl monomer such as styrene and $\alpha$-methyl styrene; a maleimide such as maleimide and phenylmaleimide; a sulfonic acid group-containing vinyl monomer and a salt thereof such as (meth)allyl sulfonic acid, (meth)allyloxy benzenesulfonic acid, and styrene sulfonic acid; a phosphoric acid group-containing vinyl monomer and a salt thereof; a vinyl monomer and a salt thereof containing tertiary salt or quaternary ammonium salt; and vinyl acetate and N-vinylpyrrolidone.

One kind of the any monomers may be used alone or two or more kinds of the any monomers may be used in a suitable combination.

Based on a total amount of 100 mol% of all the structural units constituting the polymer, the content of the any structural unit in the polymer is preferably 0 mol% to 90 mol%, more preferably 0 mol% to 50 mol%, and even more preferably 0 mol% to 20 mol%. If the value is equal to or less than the upper limit above, then a reduction in battery performance can be suppressed.

<Fabrication of binder>

The fabrication of the binder is not particularly limited, and a known polymerization method can be used.

The method of polymerizing N-vinyl formamide alone or the method of polymerizing N-vinyl formamide and the any monomer are not particularly limited, and are selected from, for instance, solution polymerization, suspension polymerization, and emulsion polymerization according to, for instance, the type of the monomer and the solubility of the generated polymer.

For instance, when each of the monomers is water soluble and the generated polymer has a high affinity toward water, aqueous polymerization can be used. Aqueous polymerization includes dissolving a monomer and a water-soluble polymerization initiator in water and obtaining the binder through external heating or the heat of polymerization.

Moreover, when the solubility of each of the monomers in water is low, suspension polymerization or emulsion polymerization can for instance be used. Emulsion polymerization includes adding, for instance, a monomer, an emulsifier, and a water-soluble polymerization initiator in water, and then heating while stirring to obtain the binder.

The polymerization initiator is not particularly limited, and can be selected from any one of, for instance, a thermal polymerization initiator and a photopolymerization initiator according to the selected polymerization method. Examples of the polymerization initiator can include, for instance, an azo compound and peroxide.

A chain transfer agent can also be present in the polymerization.

The polymerization temperature is not particularly limited, and is, from the viewpoint of the polymerization reaction, and the stability and operability of the raw materials, preferably 0°C to 200°C.

The polymerization time is not particularly limited, and is, from the viewpoint of the polymerization reaction, and the stability and operability of the raw materials, preferably 0.1 hours to 100 hours.

Furthermore, water is removed through filtration, centrifugal separation, thermal drying, drying under reduced pressure, or a combination thereof to obtain the powdered binder.

The binder is preferably electrochemically stable.

The electrochemical stability of the binder is evaluated with the oxidation current value or the reduction current value obtained through cyclic voltammetry.

The oxidation current value of the binder is obtained with the cyclic voltammetry of the following Condition I. The smaller the oxidation current value (i.e., closer to 0 mA/g), the better the oxidation stability, and the more the cyclic characteristics of the electrochemical element can be improved. The oxidation current value is, for instance, preferably 2 mA/g or less, more preferably 1.8 mA/g or less.

The oxidation current value is expressed as an absolute value.

<Condition I>

Using the three-electrode electrolytic cell of the following specification, the current value of the first cycle is determined with a scan speed of 1 mV/s and a scan range of 3.5 V~5 V. The oxidation current value is obtained by dividing the current value at a voltage value of 4.8V by the mass of a working electrode.

{Specification of three-electrode electrolytic cell}

working electrode: an electrode of a mixture layer containing 1 part by mass of a binder for an electrode and 1 part by mass of acetylene black is disposed between an aluminum foil and an aluminum mesh.
reference electrode: a lithium foil.
counter electrode: a lithium foil.
electrolyte solution: 1 mol/L of a hexafluorophosphate lithium solution (solvent: ethylene carbonate/diethyl carbonate=1/2 (volume ratio)).

The reduction current value of the binder is obtained with the cyclic voltammetry of the following Condition II. The smaller the reduction current value (i.e., closer to 0 mA/g), the better the reduction stability, and the more the cyclic characteristics of the electrochemical element can be improved. The reduction current value is, for instance, preferably 5 mA/g or less, more preferably 4 mA/g or less. The reduction current value is expressed as an absolute value.

<Condition II>

Using the above three-electrode electrolytic cell, the current value of the first cycle is determined with a scan speed of 1 mV/s and a scan range of 3 V~0 V. The reduction current value is obtained by dividing the current value at a voltage value of 0.5V by the mass of the working electrode.

(Composition for electrode of electrochemical element)

The composition for an electrode of an electrochemical element (hereinafter may be referred as a composition for an electrode) contains a binder.

Examples of the form of the composition for an electrode can include, for instance, powdered or a slurry formed by dispersing in a solvent such as water. From the viewpoint of stability or economy of storage or circulation, and ease of operation, powdered is preferred.

The content of the binder in the powdered composition for an electrode is, for instance, preferably 50 mass% or greater, more preferably 80 mass% or greater, and can also be 100 mass%. If the value is equal to or greater than the lower limit above, then the effect of the invention is significantly displayed.

The content of the binder in the slurry composition for an electrode is, for instance, preferably 20 mass% or greater, more preferably 40 mass% or greater. If the value is equal to or greater than the lower limit above, then the effect of the invention is significantly displayed.

The composition for an electrode can also contain an additive such as a viscosity modifier as needed.

Examples of the viscosity modifier can include, for instance: a cellulose-based polymer such as carboxymethyl cellulose, methyl cellulose, and hydroxypropylcellulose, and an ammonium salt of the polymers; a poly(meth)acrylate such as sodium poly(meth)acrylate; polyvinyl alcohol, polyethylene oxide, polyvinyl pyrrolidone, a copolymer of acrylic acid or acrylate and vinyl alcohol, maleic anhydride, a copolymer of maleic acid or fumaric acid and vinyl alcohol, modified polyvinyl alcohol, modified polyacrylic acid, polyethylene glycol, and polycarboxylic acid. In particular, the additive is preferably electrochemically stable since it remains on the electrode.

When the composition for an electrode contains an additive, based on 100 mass% of the composition for an electrode, the content of the additive in the composition for an electrode is preferably 10 mass% or less. In particular, from the viewpoint of further improving battery performance, the composition for an electrode preferably does not contain an additive.

<Fabrication of composition for electrode>

Examples of the fabrication of the composition for an electrode can include, for instance: a method of powder mixing a powdered binder and a powdered additive added as needed, and a method of dispersing a binder and a powdered additive added as needed in water, an organic solvent, or a mixture solution of water and an organic solvent.

(Electrode for electrochemical element)

The electrode for an electrochemical element (sometimes referred to as an electrode in the following) has a current collector and a mixture layer disposed on the current collector.

The mixture layer contains a composition for an electrode and an electrode active material, and is, for instance, a layer formed on at least one surface of a tabular current collector.

The thickness of the mixture layer is not particularly limited, and is, for instance, preferably 20 $\mu$m to 200 $\mu$m, more preferably 70 $\mu$m to 120 $\mu$m. Moreover, comparing to the cathode, the capacity of the active material of the anode is less, and therefore the mixture layer of the anode is preferably thicker than the mixture layer of the cathode.

The only condition for the electrode active material is that the potential of the anode is different from the potential of the cathode.

Regarding the lithium ion secondary battery, the electrode active material of the anode (anode active material) can be a material having a higher potential (relative to metal lithium) in comparison to the electrode active material of the cathode (cathode active material), and is capable of adsorbing/desorbing lithium ions during charge/discharge. Examples can include, for instance: a lithium-containing metal composite oxide containing lithium and a metal selected from at least one of iron, cobalt, nickel, manganese, and vanadium, a conductive polymer such as polyarylenevinylene and a derivative thereof such as polyaniline, polythiophene, polyacetylene and a derivative thereof, polyparaphenylene and a derivative thereof, polypyrrole and a derivative thereof, polythienylene and a derivative thereof, polypyridinediyl and a derivative thereof, and polyisothianaphthenylene and a derivative thereof. The conductive polymer is preferably a polymer of an aniline derivative capable of being dissolved in an organic solvent. One kind of the anode active materials may be used alone or two or more kinds of the anode active materials may be used in a suitable combination.

Examples of the cathode active material can include, for instance: a carbon material such as graphite, amorphous carbon, carbon fiber, coke, and activated carbon; and a complex of the carbon materials and a metal such as silicon, tin, and silver or an oxide of the metals. One kind of the cathode active materials may be used alone or two or more kinds of the cathode active materials may be used in a suitable combination.

A lithium-containing metal composite oxide is preferably used in the lithium ion secondary battery as the anode active material, and graphite is preferably used as the cathode active material. With such a combination, the voltage of the lithium ion secondary battery can be increased to, for instance, 4 V or greater.

The mixture layer can also contain a conductive auxiliary agent. The battery performance can further be improved by containing a conductive auxiliary agent.

Examples of the conductive auxiliary agent can include, for instance: graphite, carbon black, acetylene black, carbon nanotube, carbon nanofiber, and conductive polymer. One kind of the conductive auxiliary agents may be used alone or two or more kinds of the conductive auxiliary agents may be used in a suitable combination.

Regarding the mixing ratio of the composition for an electrode and the electrode active material forming the mixture layer, based on 100 parts by mass of the electrode active material, the composition for an electrode is preferably 0.1 parts by mass to 10 parts by mass.

Regarding the mixing ratio of the conductive auxiliary agent and the electrode active material forming the mixture layer, based on 100 parts by mass of the electrode active material, the conductive auxiliary agent is preferably 0 parts by mass to 10 parts by mass, more preferably 0.1 parts by mass to 10 parts by mass.

The current collector only needs to be a conductive material, and examples can include, for instance, a metal such as aluminum, copper, and nickel.

The shape of the current collector can be decided according to the configuration of the target battery, and examples include, for instance, a thin film, a mesh, and a fiber. In particular, a thin film is preferred.

The thickness of the current collector is not particularly limited, and is preferably 5 $\mu$m to 30 $\mu$m, more preferably 8 $\mu$m to 25 $\mu$m.

<Fabrication of electrode>

The electrode can be fabricated with a known method. For instance, a slurry (sometimes referred to as an electrode slurry in particular) is prepared by dispersing a powdered composition for an electrode and an electrode active material in a solvent such as water (slurry preparation step), then the electrode slurry is coated on a current collector (coating step), and then the solvent is removed (solvent removal step), thereby obtaining a solid layer maintaining the electrode active material with a binder.

In the slurry preparation step, the composition for an electrode, the electrode active material, and the optional conductive auxiliary agent or additive are dispersed in the solvent.

Examples of the solvent can include, for instance, water and a mixture solution of water and an organic solvent. The organic solvent is capable of uniformly dissolving or dispersing the composition for an electrode, and examples can include, for instance: NMP, a mixture solution of NMP and an ester solvent (such as ethyl acetate, N-butyl acetate, butyl cellosolve acetate, or butylcarbitol acetate), and a mixed solution of NMP and an ethylene glycol dimethyl ether solvent (such as diglyme, triglyme, or tetraglyme). One kind of the organic solvents may be used alone or two or more kinds of the organic solvents may be used in a suitable combination. In particular, since the organic solvent is a high environmental burden, water is preferred as the solvent. Moreover, for the binder of the invention, the higher the content of the N-vinyl formamide unit in the polymer, the higher the hydrophilicity, and therefore the more readily the polymer dissolves or disperses in water.

The content of the solvent in the electrode slurry only needs to be the minimum amount required to maintain the dissolved state or dispersed state of the composition for an electrode at normal temperature. Moreover, the content of the solvent in the electrode slurry is decided based on the viscosity at which the electrode slurry is readily coated on the current collector in the coating step. Regarding the viscosity of the electrode slurry in the coating step, the viscosity of using a rheometer at a shear velocity of 100 s$^{-1}$ is preferably 0.1 Pa·s to 100 Pa·s, more preferably 0.5 Pa·s to 10 Pa·s. If the viscosity exceeds the upper limit above, then a blur or lineation may be generated in the surface of the mixture layer; if the viscosity is less than the lower limit above, then a spot may be generated in the surface of the mixture layer.

The only condition for the coating step is that the electrode slurry is coated on the current collector in any thickness, and examples of the method include, for instance, a doctor blade method, an immersion method, a reverse roll method, a direct roll method, a gravure method, an extrusion method, and a brush coating method.

The only condition for the solvent removal step is that the solvent is sufficiently removed and the binder is not decomposed, and examples of the method can include, for instance, drying with warm air, hot air, or low moisture wind, vacuum drying, and irradiation drying with, for instance, (far-)infrared and an electron beam.

In particular, in the step, the heating preferably occurs at 40°C to 140°C, more preferably 60°C to 120°C. If the temperature is equal to or greater than the lower limit above, then the binding property between the active material and the current collector or between the active materials can be further increased. If the temperature is equal to or less than the upper limit above, then the binder does not decompose readily and the current collector does not corrode readily.

The processing time for the present step is decided based on the temperature condition, and is, for instance, preferably 1 minute to 20 hours.

After the solvent removal step, calendering (calendering step) can also be performed on the mixture layer as needed. By performing the calendering step, the area of the mixture layer can be expanded, and by adjusting the mixture layer to any thickness, the smoothness and electrical density of the mixture layer can be increased. Examples of the calendering method can include, for instance, mold pressing and roll pressing.

The obtained electrode can also be cut into any dimension (cutting step) as needed.

The electrode can also be formed by laminating the current collector, the mixture layer, and a mesh in sequence. Examples of the mesh can include, for instance, a mesh made of a metal such as aluminum.

(Lithium ion secondary battery)

The lithium ion secondary battery used as a type of an electrochemical element has the above electrode. The lithium ion secondary battery can be formed by, for instance: overlapping an anode and a cathode separated by an isolation film containing, for instance, a polyethylene microporous membrane, obtaining a winding object by winding the anode and the cathode, and then housing the winding object and an electrolyte solution in a battery container together.

The electrolyte solution is formed by dissolving an electrolyte in an organic solvent as a solvent.

Examples of the organic solvent of the electrolyte solution include, for instance: a carbonate such as propylene carbonate, ethylene carbonate, butylene carbonate, dimethyl carbonate, diethyl carbonate, and methylethyl carbonate; a lactone such as γ-butyrolactone lactone; an ether such as trimethoxymethane, 1,2-dimethoxyethane, diethyl ether, 2-ethoxyethane, tetrahydrofuran, and 2-methyl tetrahydrofuran; a sulfoxide such as dimethyl sulfoxide; a oxolane such as 1,3-dioxolane and 4-methyl-1,3-dioxolane; a nitrogen-containing compound such as acetonitrile, nitromethane, and NMP; an ester such as methyl formate, methyl acetate, butyl acetate, methyl propionate, ethyl propionate, and phosphotriester; a glyme such as diglyme, triglyme, and tetraglyme; a ketone such as acetone, diethyl ketone, methyl ethyl ketone, and methyl isobutyl ketone; a sulfone such as sulfolane; a oxazolinone such as 3-methyl-2-oxazolidinone; and a sultone such as 1,3-propane sultone, 4-butane sultone, and naphthasultone. One kind of the organic solvents may be used alone or two or more kinds of the organic solvents may be used in a suitable combination.

Examples of the electrolyte can include, for instance, $LiClO_4$, $LiBF_4$, LiI, $LiPF_6$, $LiCF_3SO_3$, $LiCF_3CO_2$, $LiAsF_6$, $LiSbF_6$, $LiAlCl_4$, LiCl, LiBr, $LiB(C_2H_5)_4$, $LiCH_3SO_3$, $LiC_4F_9SO_3$, $Li(CF_3SO_2)_2N$, and $Li[(CO_2)_2]_2B$.

The electrolyte solution of the lithium ion secondary battery is preferably formed by dissolving $LiPF_6$ in a carbonate.

{Fabrication of lithium ion secondary battery}

An example of the fabrication of the lithium ion secondary battery is described below.

First, an anode and a cathode are wound with an isolation film in between to form a winding body. The obtained winding body is inserted into a battery can, and a tab terminal pre-welded to the current collector of the cathode is welded to the bottom of the battery can. Next, an electrolyte solution is injected into the battery can, and the tab terminal pre-welded to the current collector of the anode is welded to the cover of the battery. The cover is disposed on the top portion of the battery can with an insulating gasket in between, and the contact portion of the cover and the battery can is sealed by calking to obtain the lithium ion secondary battery.

The battery performance, in particular the rate characteristics of the lithium ion secondary battery made in such manner, is superior. The superior battery performance is attributed to: the mixture layer contains the composition for an electrode of the invention, and therefore can suppress swelling due to the swelling of the electrolyte solution. As a result, the resistance does not increase and the binding property does not decrease, and high battery performance can thus be maintained.

Moreover, since the binding property of the binder is maintained long-term, the life of the lithium ion secondary battery is longer.

[Embodiments]

The invention is described with embodiments below. However, the invention is not limited to the embodiments.

(Embodiment 1)

30 parts by mass of N-vinyl formamide was mixed with 70 parts by mass of deionized water, and the mixture was adjusted with phosphoric acid at a pH value of 6.3 to obtain a monomer adjusting solution. After the monomer adjusting solution was cooled to 5°C, the monomer adjusting solution was placed into a thermally insulated reaction vessel provided with a thermometer and aerated with nitrogen for 15 minutes. 1500 mass ppm (relative to monomer) of 2,2'-azobis(2-amidinopropane)dihydrochloride (made by Wako Pure Chemical Industries, Ltd., V-50) was added to the monomer adjusting solution in the form of 12 mass% of an aqueous solution. Next, 200 mass ppm (relative to monomer) of t-butyl hydroperoxide was added to the monomer adjusting solution in the form of 10 mass% of an aqueous solution, 200 mass ppm (relative to monomer) of sodium bisulfite was added to the monomer adjusting solution in the form of 10 mass% of an aqueous solution, and the mixture was polymerized. After the internal temperature exceeded the peak temperature of the polymerization heat, the mixture was cured for 1 hour, the gel was removed, and the mixture was pulverized with a meat chopper. The pulverized material was dried for 10 hours at 60°C, and the obtained solid was pulverized to obtain powdered poly-N-vinyl formamide (PNVF) having a viscosity average molecular weight of 2.5 million used as the binder. The oxidation current value and the reduction current value of the obtained binder were determined. The results are shown in Table 1.

<Fabrication of anode for battery>

0.06 g of the binder and 2.0 g of water were kneaded (rotation of 1000 rpm, revolution of 2000 rpm) with a rotation-revolution mixer (Thinky mixer, made by Thinky Corporation) to obtain a binder solution. 3.0 g of lithium cobalt oxide (hereinafter LCO) (Cellseed C-5H, Nippon Chemical Industrial Co., Ltd.) was added to the binder solution and the mixture was kneaded with the rotation-revolution mixer. Then, 0.15 g of acetylene black (hereinafter AB) (Denki Kagaku Kogyo Co., Ltd.) was added to the binder solution and the mixture was kneaded to obtain a kneaded product. Water was added to the kneaded product to adjust the viscosity of the kneaded product such that the kneaded product was suitable for coating. An anode slurry was thus obtained.

The obtained anode slurry was uniformly coated on a current collector (aluminum foil, thickness of 20 $\mu$m) with a doctor blade method. Then, the current collector with the anode slurry coated thereon was dried for 10 minutes on a hot plate at 100°C. Next, the current collector with the anode slurry coated thereon was dried under reduced pressure for 12 hours with a vacuum dryer at 0.6 kPa and 100°C to obtain the anode with the mixture layer having a thickness of 100 $\mu$m. The peel strength of the obtained anode was determined. The results are shown in Table 1.

<Fabrication of 2016-type coin battery (lithium ion secondary battery)>

The anode obtained in <Fabrication of electrode for battery> and the cathode of metal lithium (thickness of 0.7 mm, made by Honjo Metal Co., Ltd.) were placed opposite to each other with an isolation film (Celgard#2400) in between. 1 mol/L of a hexafluorophosphate lithium (LiPF$_6$) solution (solvent: ethylene carbonate/diethyl carbonate=1/2 (volume ratio)) was used as the electrolyte solution to fabricate the 2016-type coin battery. The cycle characteristics and the rate characteristics of the 2016-type coin battery were evaluated. The results are shown in Table 1.

(Embodiment 2)

Except for the amount of 2,2'-azobis(2-amidinopropane)diacetate added being set to 3000 mass ppm (relative to monomer), the amount of t-butyl hydroperoxide added was set to 400 mass ppm (relative to monomer), and the amount of sodium bisulfite added was set to 400 mass ppm (relative to monomer), embodiment 2 was carried out in the same manner as embodiment 1 to obtain powdered PNVF having a viscosity average molecular weight of 1.5 million used as the binder. The oxidation current value and the reduction current value of the obtained binder were determined, and the results are shown in Table 1. The anode and the 2016-type coin battery were fabricated in the same manner as embodiment 1 using the obtained binder, and then the peel strength, the cycle characteristics, and the rate characteristics were evaluated. The results are shown in Table 1.

(Embodiment 3)

An aqueous solution of sodium hypophosphite containing 0.5 parts by mass of sodium hypophosphite relative to 70 parts by mass of deionized water was heated to 70°C and then aerated for 15 minutes with nitrogen. After 1 part by mass of 2,2'-azobis(2-amidinopropane)dihydrochloride (made by Wako Pure Chemical Industries, Ltd., V-50) was added to the aqueous solution of sodium hypophosphite aerated with nitrogen, 30 parts by mass of PNVF was added dropwise for 3 hours. After PNVF was added dropwise for 1 hour, 0.5 parts by mass of V-50 was added to the aqueous solution of sodium hypophosphite in the form of 10 mass% of an aqueous solution. After the dropwise addition was complete, the mixture was maintained at 70°C for 3 hours and then cooled to obtain an aqueous solution. The obtained aqueous solution was put in a large amount of methanol, and then the mixture was dehydrated and dried to obtain a solid. The obtained solid was pulverized to obtain PNVF having a viscosity average molecular weight of 680,000 used as the binder. The oxidation current value and the reduction current value of the obtained binder were determined, and the results are shown in Table 1. The anode and the 2016-type coin battery were fabricated in the same manner as embodiment 1 using the obtained binder, and then the peel strength, the cycle characteristics, and the rate characteristics were evaluated. The results are shown in Table 1.

(Embodiment 4)

<Fabrication of cathode for battery>

0.1 g of the binder of embodiment 1 and 2.4 g of water were kneaded with the rotation-revolution mixer to obtain a binder solution. 5.0 g of natural graphite-based cathode active material (MPGC16, made by Mitsubishi Chemical Corporation) was added to the binder solution and the mixture was kneaded with the rotation-revolution mixer to obtain a kneaded product. Water was added to the kneaded product to adjust the viscosity of the kneaded product such that the kneaded product was suitable for coating. A cathode slurry was thus obtained.

The obtained cathode slurry was uniformly coated on a current collector (copper foil, thickness of 18 $\mu$m) with a doctor blade method. Next, the current collector with the anode slurry coated thereon was dried under reduced pressure for 12 hours with a vacuum dryer at 0.6 kPa and 100°C to obtain the cathode with the mixture layer (cathode layer) having a thickness of 80 $\mu$m. The peel strength of the obtained cathode was determined. The results are shown in Table 1.

<Fabrication of 2016-type coin battery (lithium ion secondary battery)>

The cathode obtained in <Fabrication of cathode for battery> and a commercial anode (metal lithium foil, thickness of 0.7 mm, made by Honjo Metal Co., Ltd.) were placed opposite to each other with an isolation film (Celgard#2400) in between. 1 mol/L of a $LiPF_6$ solution (solvent: ethylene carbonate/diethyl carbonate=1/2 (volume ratio)) was used as the electrolyte solution to fabricate the 2016-type coin battery. The cycle characteristics and the rate characteristics of the 2016-type coin battery were evaluated. The results are shown in Table 1.

(Comparative embodiment 1)

Except for using poly-N-vinyl acetamide (PNVA) (GE191-100, made by Showa Denko Co., Ltd.) as the binder, the anode and the 2016-type coin battery were fabricated in the same manner as embodiment 1, and then the peel strength, the cycle characteristics, and the rate characteristics were evaluated. The results are shown in Table 1. Moreover, the oxidation current value and the reduction current value of PNVA were determined. The results are shown in Table 1.

(Comparative embodiment 2)

Except for using PVDF (PVDF#1100, made by Kishida Chemical Co., Ltd.) as the binder and using the following method to fabricate the anode, the peel strength, the cycle characteristics, and the rate characteristics were evaluated in the same manner as embodiment 1. The results are shown in Table 1. Moreover, the oxidation current value and the reduction current value of PVDF were determined, and the results are shown in Table 1.

<Fabrication of anode>

0.06 g of PVDF and 2.0 g of N-methylpyrrolidone (hereinafter NMP) were kneaded with the rotation-revolution mixer. 3.0 g of LCO was added and the mixture was kneaded with the rotation-revolution mixer. After 0.15 g of AB was added and the mixture was kneaded again, NMP was added to adjust the viscosity of the mixture such that the mixture was suitable for coating. An anode slurry was thus obtained.

The obtained anode slurry was uniformly coated on a current collector (aluminum foil, thickness of 20 $\mu$m) with a doctor blade method. Then, the current collector with the anode slurry coated thereon was dried for 10 minutes on a hot plate at 140°C. Next, the current collector with the anode slurry coated thereon was dried under reduced pressure for 12 hours with a vacuum dryer at 0.6 kPa and 100°C to obtain the anode with the mixture layer having a thickness of 100 $\mu$m.

(Comparative embodiment 3)

Except for Styrene-butadiene rubber (SBR) (TRD2001, made by JSR Corporation) was used as the binder, carboxymethyl cellulose (CMC) (Cellogen 4-H, made by Dai-Ichi Kogyo Seiyaku Co., Ltd.) was used as the thickening agent, and the following method was used to fabricate the anode, the peel strength, the cycle characteristics, and the rate characteristics were evaluated in the same manner as embodiment 1. The results are shown in Table 1. Moreover, the oxidation current value and the reduction current value of the mixture of SBR and CMC (SBR/CMC=2/1 (mass ratio)) were determined. The results are shown in Table 1.

<Fabrication of anode>

0.06 g of CMC and 2.0 g of water were kneaded with the rotation-revolution mixer. 3.0 g of LCO was added and the mixture was kneaded with the rotation-revolution mixer. After 0.12 g of AB was added and the mixture was kneaded again, 0.12 g of a solid equivalent of an aqueous dispersion of SBR (TRD2001, JSR Corporation) was added, and then water was added to adjust the viscosity of the mixture such that the mixture was suitable for coating. An anode slurry was thus obtained.

The obtained anode slurry was uniformly coated on a current collector (aluminum foil, thickness of 20 $\mu$m) with a doctor blade method. Then, the current collector with the anode slurry coated thereon was dried for 10 minutes on a hot plate at 100°C. Next, the current collector with the anode slurry coated thereon was dried under reduced pressure for 12 hours with a vacuum dryer at 0.6 kPa and 100°C to obtain the anode with the mixture layer having a thickness of 100 $\mu$m.

(Comparative embodiment 4)

Except for using PNVA (GE191-100, made by Showa Denko Co., Ltd.) as the binder, the cathode and the 2016-type coin battery were fabricated in the same manner as embodiment 4, and then the peel strength, the cycle characteristics, and the rate characteristics were evaluated. The results are shown in Table 1.

(Evaluation methods)

<Peel strength>

The anode or cathode (width of 2 cm) of each of the embodiments was affixed to a polycarbonate sheet (2.5 cm×10cm×1 mm of thickness) with a double-sided tape (#570, made by Sekisui Chemical Co., Ltd.) to obtain the samples. Here, the anode or cathode was affixed to the polycarbonate sheet with the mixture layer facing the polycarbonate sheet.

The average load of peeling the current collector off from the samples was determined with a tensilon (RTC-1210A, made by Orientec Inc.). The average load was determined for 5 samples, and the average value thereof was used as the peel strength. The conditions for the determination were a peel speed of 10 mm/min, a peel angle of 180°, an ambient temperature of 23°C, and an ambient humidity of 40%RH. The greater the peel strength, the better the binding property of the mixture layer is through the current collector.

<Cycle characteristics>

The charge and discharge defined one cycle, and the cycle characteristics were evaluated according to the discharge capacity of the 50th cycle.

The charge/discharge rate of each of embodiment 1 to embodiment 3 and comparative embodiment 1 to comparative embodiment 3 was set to 0.5 C at 60°C, and one cycle was defined as charging to 4.2 V and then discharging until 3 V with a constant current method (current density: 0.6 mA/g-active material). The initial discharge capacity of each embodiment was about 140 mAh/g.

The charge/discharge rate of embodiment 4 and comparative embodiment 4 was set to 0.5 C at 60°C, and one cycle was defined as charging to 1.5 V and then discharging until 0.05 V with a constant current method (current density: 0.6 mA/g-active material). The initial discharge capacity of each embodiment was about 360 mAh/g.

The greater the discharge capacity of the 50th cycle, the longer the battery life.

<Rate characteristics>

The amount of constant current when charging was set to 0.2 C, and when repeating each cycle, the amounts of constant current were respectively changed to 0.2 C, 0.5 C, 1.0 C, 2.0 C, and 5.0 C in order when discharging. A constant current method was used to perform charge/discharge. The ratio of the discharge capacity at 5.0 C relative to the discharge capacity at 0.2 C was expressed in percentage. The greater the value, the more efficient the high-speed charge/discharge.

<Evaluation of electrochemical stability of binder>

{Oxidation current value}

The oxidation current value was determined with cyclic voltammetry.

10 parts by mass of an aqueous solution having 4 mass% of the binder of each of the embodiments, and 0.4 parts by mass of AB were kneaded (rotation of 1000 rpm, revolution of 2000 rpm) with the rotation-revolution mixer to obtain a kneaded product. Water was added to the kneaded product to adjust the viscosity of the kneaded product such that the kneaded product was suitable for coating. An electrode slurry was thus obtained.

The electrode slurry was coated on an aluminium foil (3 cm×3 cm×20μm of thickness) in a thickness of 100 μm and in a range of 2 cm×3 cm. An aluminum mesh (3 cm×3 cm, thread diameter of 0.1 mm, mesh spacing of 0.112 mm) was placed on the coated electrode slurry to obtain a laminated body. The obtained laminated body was heated for 15 minutes on a hot plate at 100°C to dry the electrode slurry. After the electrode slurry was dried, the laminated body was cut into a size of 3 cm×1 cm as the working electrode. The obtained working electrode was used to fabricate a three-electrode electrolytic cell of the following specification.

Specification of three-electrode electrolytic cell

reference electrode: a lithium foil, 3 cm×0.5 cm×700 μm of thickness.

counter electrode: a lithium foil, 3 cm×1 cm×700 μm of thickness.

electrolyte solution: 1 mol/L of a hexafluorophosphate lithium solution (solvent: ethylene carbonate/diethyl carbonate=1/2 (volume ratio)).

distance between electrodes: 15 mm.

amount of electrolyte solution: 20 mL.

Using the above three-electrode electrolytic cell, the electrical current value of the first cycle was determined with a scan speed of 1 mV/s and a scan range of 3.5 V to 5 V at a temperature of 23°C. The oxidation current value was obtained by dividing the current value (mA) at a press value of 4.8 V by the mass (g) of the working electrode.

{Reduction current value}

The current value of the first cycle was determined in the same manner as in {Oxidation current value} except the scan speed was set to 1 mV/s and the scan range was set to 3 V to 0 V. The reduction current value was obtained by dividing the current value (mA) at a voltage value of 0.5 V by the mass (g) of the working electrode.

Table 1

| | Applicatio n electrode | Compositions | | | | Electrode evaluation | | | Electrochemical stability of binder | |
|---|---|---|---|---|---|---|---|---|---|---|
| | | Binder | | Thickenin g agent | Solvent of electrode slurry | Peel strengt h | Cycle characteristic s | Rate characteristic s | Oxidation current value | Reductio n current value |
| | | Type | Viscosity average molecular weight | | | (N/m) | (mAh/g) | (%) | (mA/g) | (mA/g) |
| Embodiment 1 | Anode | PNVF | 2.5 million | - | Water | 0.30 | 132 | 96.5 | 1.1 | 1.9 |
| Embodiment 2 | Anode | PNVF | 1.5 million | - | Water | 0.27 | 135 | 97.8 | 1.3 | 2.1 |
| Embodiment 3 | Anode | PNVF | 680,000 | - | Water | 0.19 | 98 | 98.5 | 1.4 | 2.0 |
| Embodiment 4 | Cathode | PNVF | 2.5 million | - | Water | 0.05 | 300 | 68.0 | 1.1 | 1.9 |
| Comparative embodiment 1 | Anode | PNVA | - | - | Water | 0.13 | 115 | 82.1 | 2.3 | 5.1 |
| Comparative embodiment 2 | Anode | PVDF | - | - | NMP | $\leqq$0.01 | 105 | 67.1 | 2.1 | 17.7 |
| Comparative embodiment 3 | Anode | SBR | - | CMC | Water | 0.06 | 2 | 7.9 | 4.3 | 1.9 |
| Comparative embodiment 4 | Cathode | PNVA | - | - | Water | 0.05 | 1.5 | 5.3 | 2.3 | 5.1 |

According to the results of Table 1, in comparison to the binder of each of comparative embodiment 1 to comparative embodiment 4 without the polymer having an N-vinyl formamide unit, the cycle characteristics and rate characteristics of the anode in embodiment 1 to embodiment 4 of the invention are higher.

It can be known from the above results that, in comparison to PNVA, PVDF, and SBR, the binder of the invention can exhibit excellent battery performance. Moreover, the binder of the present embodiment can be provided in a water-soluble powder form, and therefore has superior convenience.

[Industrial application]

The binder of the invention is a polymer having an N-vinyl formamide unit according to appended claims, and therefore a reduction of battery performance due to deterioration of binding property and increase of internal resistance of the battery can be suppressed, thereby improving the battery performance. Therefore, the binder of the invention can be used for an electrode of various electrochemical elements, in particular secondary batteries.

**Claims**

1. A binder for an electrode of an electrochemical element, wherein the binder is a polymer having an N-vinyl formamide unit, **characterized in that** the viscosity average molecular weight of the polymer is 100,000 to 8 million, obtained by the method described in the chapter "Calculation of the viscosity average molecular weight" of the description, wherein the content of the N-vinyl formamide unit in the polymer is 50 mol% to 100 mol%.

2. The binder for an electrode of an electrochemical element of claim 1, wherein the binder is water-soluble.

3. The binder for an electrode of an electrochemical element of claim 1 or 2, wherein the viscosity average molecular weight of the polymer is 100,000 to 5 million.

4. A composition for an electrode of an electrochemical element, wherein the composition contains the binder for an electrode of an electrochemical element of any one of claims 1 to 3.

5. An electrode for an electrochemical element, including a current collector and a mixture layer disposed on the current collector, wherein the mixture layer contains the composition for an electrode of an electrochemical element of claim 4 and an electrode active material.

6. An electrochemical element, including the electrode for an electrochemical element of claim 5.

**Patentansprüche**

1. Bindemittel für eine Elektrode eines elektrochemischen Elements, wobei das Bindemittel ein Polymer mit einer N-Vinylformamideinheit ist, **dadurch gekennzeichnet, dass** das viskositätsmittlere Molekulargewicht des Polymers 100.000 bis 8 Millionen beträgt, erhalten durch das Verfahren, wie in Kapitel "Berechnung des viskositätsmittleren Molekulargewichts" der Beschreibung beschrieben, wobei der Gehalt der N-Vinylformamideinheit in dem Polymer 50 Mol% bis 100 Mol% beträgt.

2. Bindemittel für eine Elektrode eines elektrochemischen Elements nach Anspruch 1, wobei das Bindemittel wasserlöslich ist.

3. Bindemittel für eine Elektrode eines elektrochemischen Elements nach Anspruch 1 oder 2, wobei das viskositätsmittlere Molekulargewicht des Polymers 100.000 bis 5 Millionen beträgt.

4. Zusammensetzung für eine Elektrode eines elektrochemischen Elements, wobei die Zusammensetzung das Bindemittel für eine Elektrode eines elektrochemischen Elements nach irgendeinem der Ansprüche 1 bis 3 enthält.

5. Elektrode für ein elektrochemisches Element, beinhaltend einen Stromkollektor und eine Mischschicht, angeordnet auf dem Stromkollektor, wobei die Mischschicht die Zusammensetzung für eine Elektrode eines elektrochemischen Elements nach Anspruch 4 und ein Elektrodenaktivmaterial enthält.

**EP 2 725 644 B1**

**6.** Elektrochemisches Element, beinhaltend die Elektrode für ein elektrochemisches Element nach Anspruch 5.


**Revendications**

**1.** Un liant pour une électrode d'un élément électrochimique, dans lequel le liant est un polymère ayant une unité N-vinylformamide, **caractérisé en ce que** le poids moléculaire moyen en viscosité du polymère est de 100.000 à 8 millions, obtenu par le procédé décrit dans le chapitre « calcul du poids moléculaire moyen en viscosité » de la description, dans lequel la teneur en unités N-vinyle formamide dans le polymère comporte de 50 % en moles à 100 % en moles.

**2.** Le liant pour une électrode d'un élément électrochimique selon la revendication 1, dans lequel le liant est soluble dans l'eau.

**3.** Le liant pour une électrode d'un élément électrochimique selon la revendication 1 ou 2, dans lequel le poids moléculaire moyen en viscosité du polymère est de 100.000 à 5 millions.

**4.** Une composition pour une électrode d'un élément électrochimique, dans laquelle la composition contient le liant pour une électrode d'un élément électrochimique selon l'une quelconque des revendications 1 à 3.

**5.** Une électrode pour un élément électrochimique, comprenant un collecteur de courant et une couche de mélange disposé sur le collecteur de courant, dans laquelle la couche de mélange contient la composition pour une électrode d'un élément électrochimique selon la revendication 4 et un matériau actif d'électrode.

**6.** Un élément électrochimique, comprenant l'électrode pour un élément électrochimique selon la revendication 5.

**REFERENCES CITED IN THE DESCRIPTION**

**Patent documents cited in the description**

- JP 2002251999 A
- JP 2002117860 A
- JP 2010177061 A
- WO 2010056934 A